# FASCICULE DE BREVET EUROPEEN

(11) **EP 4 449 032 B1**
(45) Date de publication et mention de la délivrance du brevet: **29.10.2025**
(21) Numéro de dépôt: 22834939.5
(22) Date de dépôt: 08.12.2022
(51) Int. Cl.: F25B 21/00, H02N 10/00

(54) **GÉNÉRATEUR MAGNÉTOCALORIQUE**
MAGNETOKALORISCHER GENERATOR
MAGNETOCALORIC GENERATOR

(30) Priorité: 15.12.2021 FR 2113535
(43) Date de publication de la demande: 23.10.2024
(73) Titulaire: magnoric, 67120 Duppigheim (FR)
(72) Inventeur: MARRAZZO, Frédéric, 67550 Vendenheim (FR); MULLER, Christian, 67000 Strasbourg (FR); RISSER, Michel, 67280 Oberhaslach (FR); TILL, Zoé, 67000 Strasbourg (FR)
(74) Mandataire: Ipsilon
(86) Numéro de dépôt international: PCT/EP2022/085011
(87) Numéro de publication internationale: WO 2023/110628

(56) Documents cités:
- WO-A1-2019/110193
- WO-A2-2009/136022
- CN-A- 113 314 292
- FR-A1- 2 904 098

## Description

### Domaine technique

La présente invention concerne un générateur magnétocalorique comportant au moins un ensemble d'éléments actifs à base de Matériaux Magnéto Caloriques (MMC), et un arrangement magnétique agencé pour être mobile par rapport à l'ensemble d'éléments actifs, ledit arrangement magnétique comportant deux rotors magnétiques superposés, dont un rotor magnétique externe et un rotor magnétique interne délimitant entre eux un entrefer, ledit rotor magnétique externe et ledit rotor magnétique interne comportant un même nombre de pôles magnétiques, ledit ensemble d'éléments actifs constituant un stator disposé dans ledit entrefer, et lesdits éléments actifs s'étendant longitudinalement dans ledit stator entre une extrémité chaude et une extrémité froide dudit générateur.

### Technique antérieure

La technologie du froid magnétique à température ambiante est connue depuis plus d'une quarantaine d'années et on connaît ses avantages en termes d'efficacité énergétique et d'impacts environnementaux réduits par rapport aux technologies conventionnelles basées sur la compression et la détente d'un gaz réfrigérant. On connaît également ses limites quant à sa puissance calorique ou de conversion d'énergie. Dès lors, les recherches menées dans ce domaine tendent toutes à améliorer les performances des générateurs magnétocaloriques, en jouant sur les paramètres des différents éléments constitutifs, tels que l'intensité et la qualité du champ magnétique, les performances du matériau magnétocalorique des éléments actifs, la surface d'échange thermique entre le fluide caloporteur et les éléments actifs, les performances des échangeurs de chaleur, etc.

Aujourd'hui, les développements concernent l'optimisation de ces générateurs en vue, d'une part, de pouvoir les fabriquer en grande série et, d'autre part, de leur garantir une durée de vie importante. En plus de devoir atteindre une efficacité énergétique commercialement intéressante, ces générateurs doivent présenter une taille ou un encombrement relativement faible pour pouvoir les intégrer dans des applications commerciales présentant des contraintes d'encombrement

Les publications WO2009/087310 et WO2015/079313 appartenant à la demanderesse donnent un aperçu des évolutions techniques déjà apportées aux générateurs magnétocaloriques, qui peuvent être encore améliorées.

La publication CN 113 314 292 A décrit un assemblage magnétique de type Halbach pour générateur de froid magnétique. Il comporte deux rotors magnétiques coaxiaux, dont un rotor extérieur et un rotor intérieur, séparés par un entrefer dans lequel sont disposés des éléments actifs sous forme de compartiments de matériau magnétocalorique. Les rotors sont entrainés en sens inverse et de manière synchrone par un moteur et un mécanisme d'entraînement mécanique. L'entrainement contrarotatif des rotors permet de créer une variation de champ magnétique appliquée aux éléments actifs situés dans l'entrefer. Cependant, ce principe ne permet pas d'exploiter toute l'énergie potentielle des aimants des rotors. En effet, sur une fraction de tour, les rotors ne sont ni en opposition de phase ni en accord de phase, ce qui constitue une phase transitoire longue et inexploitable du point de vue des MMC, pénalisant les performances du générateur. Lorsque les aimants sont en opposition de phase sur la moitie d'un temps de cycle actif, l'énergie potentielle des aimants est totalement inexploitée et par conséquent, les aimants sont mal valorisés. En outre, ce principe est source de courants de Foucault au sein de la structure des rotors magnétiques qu'il convient de gérer, et expose les aimants à des risques de désaimantation par dépassement de leur champ magnétique coercitif.

La publication WO 2019/110193 A1 décrit une matrice composite à base de matériaux magnétocaloriques. Ces matériaux sont présents sous la forme de particules maintenues ensemble par un enrobé à base d'un autre matériau non magnétocalorique, tel que du nickel. Les particules enrobées définissent entre elles des cavités pour la circulation d'un liquide. Le résultat est une matrice poreuse amorphe, c'est à dire aléatoire et non régulière, générant inévitablement des pertes de charge, qui sont néfastes pour les performances d'un générateur de froid magnétique.

### Exposé de l'invention

La présente invention vise à proposer une nouvelle génération de générateurs magnétocaloriques visant à optimiser les performances du générateur, maximiser l'intensité et la variation de champ de magnétique appliqué aux éléments actifs, optimiser la réponse desdits éléments actifs, optimiser l'exploitation de l'énergie magnétique des aimants (BHmax), réduire les pertes de charge et les sources de frottement, éviter les courants de Foucault, réduire la consommation énergétique, personnaliser les caractéristiques techniques du générateur pour atteindre les objectifs visés et répondre ainsi à une large gamme d'applications : chauffage, refroidissement, climatisation, pompe à chaleur réversible, moteur thermomagnétique, etc. Il s'agit en outre d'un convertisseur réversible permettant le pompage d'une énergie thermique d'une source froide vers une source chaude à l'aide d'un travail mécanique et/ou électrique, ou bien la conversion d'énergie thermique sous la forme d'un différentiel de température en travail mécanique et/ou électrique ; la conversion entre énergie mécanique et électrique est dans ce cas assurée par une machine électromagnétique classique telle qu'un alternateur, une dynamo, un moteur électrique, etc.

Dans ce but, l'invention concerne un générateur du genre indiqué en préambule, caractérisé en ce qu'un desdits rotors magnétiques externe ou interne est couplé d'une part à une machine électrique par un couplage mécanique, et d'autre part à l'autre desdits rotors magnétiques interne ou externe par un couplage magnétique, de sorte que lesdits rotors se déplacent dans un même sens et sont magnétiquement synchrones.

Dans une forme préférée de l'invention, ledit générateur présente une configuration cylindrique, les rotors magnétiques externe et interne sont concentriques autour de leur axe de rotation, et ledit stator présente une forme annulaire, concentrique avec lesdits rotors magnétiques externe et interne.

Ledit rotor magnétique externe est préférentiellement couplé à ladite machine électrique. Dans ce cas, il comporte une couronne crantée périphérique, et ledit couplage mécanique entre ledit rotor magnétique externe et ladite machine électrique comporte une transmission par courroie crantée engrenant ladite couronne crantée.

Dans la forme préférée de l'invention, ledit générateur comporte au moins des moyens de guidage en rotation dudit rotor magnétique externe et dudit rotor magnétique interne portés par un carter, et lesdits moyens de guidage en rotation dudit rotor magnétique externe comportent des organes de guidage périphériques, montés dans les extrémités dudit rotor magnétique externe et agencés pour circuler sur un chemin de guidage appartenant audit carter.

Lesdits organes de guidage sont avantageusement montés sur ledit rotor magnétique externe dans des secteurs périphériques situés en dehors desdits pôles magnétiques. Et ledit chemin de guidage est avantageusement prévu sur une bague de guidage rapportée sur ledit carter, ladite bague de guidage pouvant être réalisée dans une matière de dureté supérieure à celle de la matière dudit carter.

De manière tout à fait avantageuse, ledit arrangement magnétique est de construction modulaire et comporte un assemblage d'au moins deux modules élémentaires empilés dans une direction longitudinale, chaque module élémentaire comporte une tranche dudit rotor magnétique externe et une tranche dudit rotor magnétique interne, et le nombre de modules élémentaires définit la longueur dudit arrangement magnétique et est déterminé en fonction de la puissance et/ou de l'écart de température ciblé pour ledit générateur.

Lesdits modules élémentaires comportent préférentiellement des formes d'emboitement complémentaires agencées pour d'une part centrer lesdits modules élémentaires par rapport audit axe de rotation et indexer la position angulaire desdits modules élémentaires l'un par rapport à l'autre.

Selon les variantes de réalisation de l'invention, ledit arrangement magnétique peut comporter en regard dudit entrefer un dispositif d'uniformisation de champ magnétique superposé auxdits pôles magnétiques dudit rotor magnétique externe et/ou dudit rotor magnétique interne.

Dans la forme préférée de l'invention, lesdits éléments actifs sont poreux et traversés chacun par un circuit caloporteur permettant une circulation alternative d'un caloporteur de ladite extrémité chaude à ladite extrémité froide dans un premier cycle de travail et inversement de ladite extrémité froide à ladite extrémité chaude dans un second cycle de travail dudit générateur. Dans ce cas, l'orientation de la circulation du caloporteur est avantageusement perpendiculaire à l'orientation des lignes de champ magnétique générées par lesdits pôles magnétiques dudit arrangement magnétique.

De préférence, le nombre d'éléments actifs dudit ensemble est un multiple du nombre de pôles magnétiques dudit arrangement magnétique, et lesdits éléments actifs sont disposés côte à côte sur la circonférence dudit stator.

Chaque élément actif peut comporter un porte-matériau longitudinal, logé dans ledit stator. Dans ce cas, les porte-matériaux peuvent présenter une section choisie parmi un carré, un rectangle, un trapèze. En outre, la longueur desdits porte-matériaux est avantageusement déterminée en fonction de la longueur dudit arrangement magnétique et de la puissance, de l'efficacité et/ou de l'écart de température ciblé pour ledit générateur.

Dans la forme préférée de l'invention, le porte-matériau de chaque élément actif comporte un logement intérieur agencé pour recevoir au moins un MMC, et au moins un raccord fluidique à chacune de ses extrémités, agencé pour raccorder ledit élément actif audit circuit caloporteur. Il peut comporter en outre au moins un répartiteur dans chaque zone d'extrémité entre ledit raccord fluidique et ledit logement intérieur.

Lesdits éléments actifs peuvent comporter au moins un bloc MMC poreux sous une forme amorphe, de lames, ou de structures de matériau régulières orientées parallèlement à l'axe longitudinal dudit porte-matériaux, et espacées entre elles d'un intervalle. Dans ce cas, les intervalles constituent avantageusement un ensemble de canaux longitudinaux permettant une circulation bidirectionnelle dudit caloporteur à travers chaque élément actif.

Lesdits éléments actifs peuvent comporter un ou plusieurs blocs MMC poreux d'un même MMC ou de différents MMC séparés entre eux par des cales de jonction, ou encore de différentes compositions MMC dosées et organisées pour obtenir une température de Curie variable. Les différents MMC ou compositions MMC sont rangés ou ordonnés préférentiellement selon une température de Curie croissante ou décroissante évoluant par palier ou de façon continue.

### Brève description des dessins

La présente invention et ses avantages apparaîtront mieux dans la description suivante de plusieurs modes de réalisation donnés à titre d'exemples non limitatifs, en référence aux dessins annexés, dans lesquels :
- La figure 1 est une vue en perspective d'un générateur magnétocalorique selon l'invention, représenté par son arrangement magnétique et son système d'entraînement en rotation,
- La figure 2 est une vue en perspective d'une partie d'un arrangement magnétique et d'un support pour éléments actifs appartenant à un générateur selon l'invention,
- La figure 3 est une vue de côté d'un générateur selon l'invention, représenté par son arrangement magnétique et ses éléments actifs,
- La figure 4 est une vue en perspective d'un arrangement magnétique d'un générateur selon l'invention, constitué d'un assemblage de deux modules élémentaires,
- La figure 5 est une vue éclatée en perspective d'un module élémentaire de la figure 4,
- La figure 6 est une vue de côté simplifiée d'un générateur selon une variante de l'invention, et similaire à la figure 3,
- La figure 7 est une vue éclatée d'un élément actif d'un générateur selon l'invention,
- La figure 8 est une vue en coupe longitudinale de l'élément actif de la figure 7, et
- La figure 9 est une vue en perspective d'un générateur selon l'invention, caréné et vu depuis une extrémité axiale comportant un système de commande du circuit caloporteur.

### Description des modes de réalisation

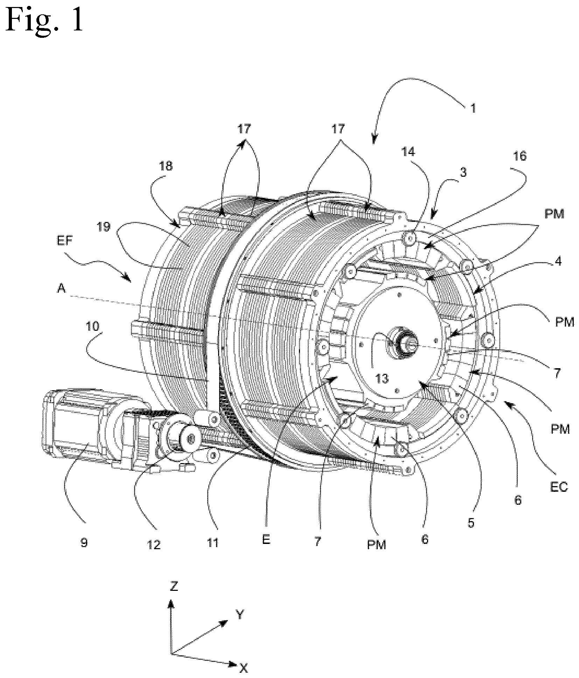

Dans les exemples de réalisation illustrés, les éléments ou parties identiques portent les mêmes numéros de référence. En outre, les termes qui ont un sens relatif, tels que vertical, horizontal, droite, gauche, avant, arrière, au-dessus, en-dessous, etc. doivent être interprétés dans des conditions normales d'utilisation de l'invention, et telles que représentées sur les figures. Les axes X, Y et Z sont quant à eux définis par un repère orthonormé illustré à la figure 1. Par ailleurs, les positions géométriques indiquées dans la description et les revendications, telles que « perpendiculaire », « parallèle », « symétrique » ne sont pas limitées au sens strict défini en géométrie, mais s'étendent à des positions géométriques qui sont proches, c'est-à-dire qui acceptent une certaine tolérance dans le domaine technique considéré, sans influence sur le résultat obtenu. Cette tolérance est notamment introduite par l'adverbe « sensiblement », sans que ce terme soit nécessairement répété devant chaque adjectif.

En référence aux figures, le générateur magnétocalorique 1 selon l'invention, appelé également par la suite « générateur 1 » comporte un ensemble d'éléments actifs 2 à base de MMC et un arrangement magnétique 3, mobiles relativement l'un par rapport à l'autre. Dans l'exemple de réalisation préférée de l'invention représenté, l'arrangement magnétique 3 est mobile par rapport à l'ensemble d'éléments actifs 2 qui est fixe, permettant de simplifier grandement le système de caloporteurs. Le générateur 1 comporte en outre un circuit caloporteur pour coupler thermiquement les éléments actifs à au moins un dispositif ou une application externe (non représenté) par l'intermédiaire d'au moins un échangeur thermique (non représenté), comme décrit par exemple dans les publications de la demanderesse citées ci-dessus. Le circuit caloporteur peut comporter un fluide caloporteur ou un caloporteur solide (non représenté) tel que celui décrit dans la publication WO 2022/112391 A1. L'invention s'intéresse particulièrement au pompage de chaleur d'une source froide à une source chaude pour la production de chaleur et/ou de froid à partir d'énergie mécanique ou électrique, en utilisant les propriétés de transition de phases magnétiques des Matériaux Magnéto Caloriques, dénommés par la suite MMC, sous l'effet d'une variation de champ magnétique au voisinage de leur température de transition, appelée également température de Curie ou température critique (Tc). Elle s'intéresse également à la conversion d'énergie thermique disponible sous forme d'un différentiel de température, en énergie mécanique ou électrique, en utilisant les mêmes propriétés des matériaux MMC sous l'effet d'une variation de température. Ainsi, le générateur 1 de l'invention constitue une machine de conversion d'énergie qui peut être réversible, c'est-à-dire qui peut fonctionner selon deux modes opératoires inverses en fonction de l'énergie d'entrée.

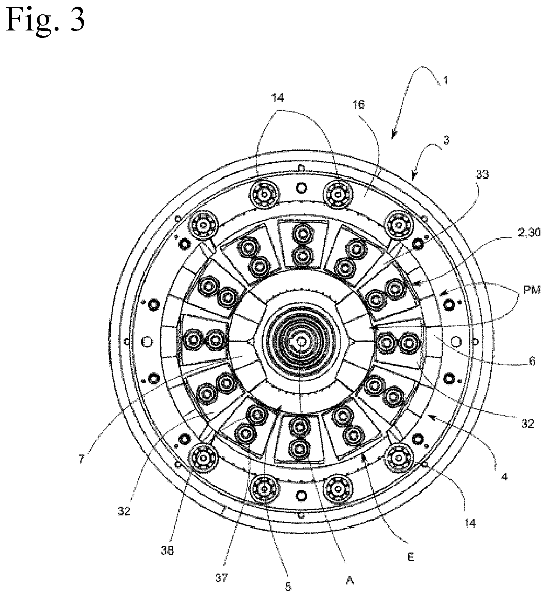

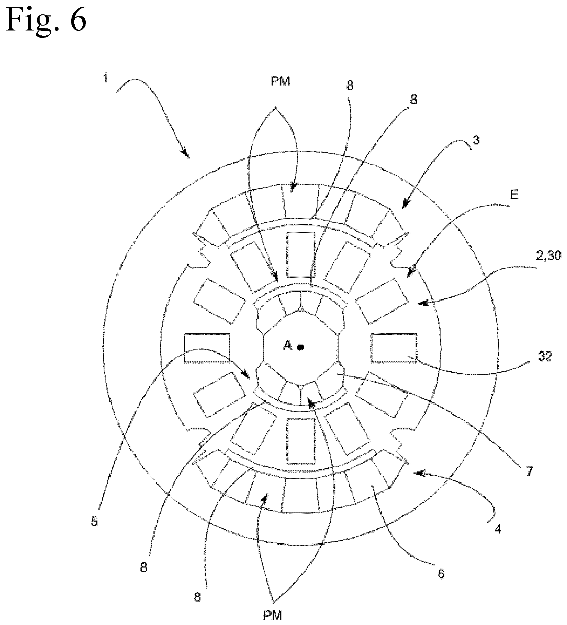

Dans l'exemple représenté, le générateur 1 est représenté dans une configuration cylindrique, et l'arrangement magnétique 3 comporte ou est formé de deux rotors magnétiques superposés et concentriques autour d'un axe de rotation A selon X, dont un rotor magnétique externe 4 et un rotor magnétique interne 5 délimitant entre eux un intervalle annulaire, appelé entrefer E. Le rotor magnétique externe 4 et le rotor magnétique interne 5 comportent un même nombre de pôles magnétiques PM, dont au moins deux pôles magnétiques PM (figures 3 et 6), quatre pôles magnétiques PM (figures 1, 4, 5), ou un nombre de pôles magnétiques PM supérieur à quatre en fonction des besoins. Les pôles magnétiques PM de chaque rotor 4, 5 sont répartis régulièrement à la circonférence de chacun des rotors 4, 5, s'étendent chacun sur un secteur angulaire de même valeur, et occupent sensiblement l'équivalent de la moitié de la circonférence du rotor 4, 5. La moitié restante de la circonférence du rotor 4, 5 est occupée par des zones vides (hors champ magnétique) (figures 1 et 6) ou comportant un matériau non magnétique et isolant thermiquement et/ou électriquement (figure 3). En outre, les pôles magnétiques PM des deux rotors 4, 5 sont alignés deux à deux pour générer une continuité des lignes de champ magnétique dans chaque paire de pôles magnétiques PM du rotor magnétique externe 4 et du rotor magnétique interne 5. Ainsi, les lignes de champ magnétique se concentrent dans l'entrefer E entre chaque paire de pôles magnétiques PM créant des zones sous champ. Cette concentration de champ magnétique a pour effet de maximiser l'intensité du champ dans les zones sous champ et maximiser la variation du champ entre les zones sous champ et les zones hors champ. Chaque pôle magnétique PM comporte ou est formé d'un ou de plusieurs générateurs magnétiques 6, 7, tels que des aimants permanents, des électroaimants, des supraconducteurs, ou tout autre générateur magnétique compatible. S'ils comportent ou sont formés de plusieurs générateurs magnétiques 6, 7, comme représenté dans les figures 1, 3, 6, alors ils sont accolés l'un à l'autre pour créer un pôle magnétique PM continu et sans coupure.

Dans une variante de réalisation illustrée à la figure 6, l'arrangement magnétique 3 comporte en outre un dispositif d'uniformisation 8 de champ magnétique agencé pour uniformiser et régulariser le champ magnétique produit par les pôles magnétiques PM, et corrélativement pour augmenter encore la performance magnétique des pôles magnétiques PM et donc l'efficacité et la puissance du générateur 1. Par exemple, la performance magnétique des pôles magnétiques PM peut être augmentée d'au moins 30% via le dispositif d'uniformisation 8, sans que cette valeur ne soit limitative. Dans l'exemple représenté, le dispositif d'uniformisation 8 de champ magnétique se présente sous la forme d'une tôle ou d'une plaque, agencée pour recouvrir l'extrémité de chacun des pôles magnétiques PM du rotor magnétique externe 4 et/ou du rotor magnétique interne 5 en regard de l'entrefer E. Le dispositif d'uniformisation 8 de champ magnétique peut présenter toute autre forme favorable à l'uniformisation du champ magnétique dans les zones sous champ au sein de l'entrefer E, sans limitation de forme, telle qu'une forme prismatique, etc. Le dispositif d'uniformisation 8 est profilé pour approcher la forme du profil des pôles magnétiques PM et/ou des éléments actifs 4. Il peut être rapporté sur les extrémités des pôles magnétiques PM par collage ou par tout autre procédé de fixation définitif équivalent. Le dispositif d'uniformisation 8 peut être réalisé dans un acier à faible taux de carbone, en fer pur, et en tout autre matériau ferromagnétique. A titre d'exemple, il peut avoir une épaisseur comprise entre 2mm à 5mm, constante ou non, et sans que cette plage de valeurs ne soit limitative.

Le rotor magnétique externe 4 et le rotor magnétique interne 5 sont couplés entre eux pour tourner dans un même sens de rotation et de manière synchrone autour de l'axe de rotation A. Ils peuvent être couplés par une transmission mécanique, telle qu'un train d'engrenage, un système courroie et poulie, un système chaine et pignon, ou similaire. Ils peuvent être couplés par une transmission électronique si chaque rotor est couplé à une motorisation. Préférentiellement, ils peuvent être couplés magnétiquement, c'est à dire sans contact, évitant ainsi les pertes de rendement par frottement. L'effet technique de ce principe d'entrainement des deux rotors permet d'exploiter l'énergie potentielle maximale (BHmax) des aimants formant les pôles magnétiques à chaque instant. Les lignes de champ suivent un trajet continu, le plus homogène et concentré possible et se rebouclent de façon continue à cheval sur les rotors intérieur 5 et extérieur 4, tournant de façon synchrone par rapport aux éléments actifs 2 situés dans l'entrefer E. Les rotors 4 et 5 sont magnétiquement synchrones puisqu'ils sont immobiles l'un par rapport à l'autre grâce à leur couplage magnétique. L'arrangement magnétique 3 est par conséquent le siège d'un champ magnétique stationnaire par rapport à lui-même, lequel tourne par rapport au stator fixe 30 générant une alternance entre zones sous champ et zones hors champ égales avec des phases transitoires les plus courtes possibles.

Dans la forme préférée de l'invention, le rotor magnétique externe 4 est entraîné en rotation par une machine électrique 9 et entraine à son tour le rotor magnétique interne 5 par couplage magnétique, tel que représenté à la figure 1. Bien entendu, la configuration inverse peut convenir, c'est-à-dire que le rotor magnétique interne 5 est entrainé par la machine électrique 9 et entraine à son tour le rotor magnétique externe 4 par couplage magnétique. Cependant, l'efficacité du couplage magnétique est nettement supérieure dans l'exemple représenté car l'inertie mécanique du rotor magnétique externe 4 est plus importante que celle du rotor magnétique interne 5. Ainsi, un entrainement mécanique externe permet de limiter les phénomènes oscillatoires en cas d'entrainement par couplage magnétique du rotor magnétique interne 5.

La machine électrique 9 peut être constituée par tout type de moteur ou tout type d'alternateur selon le mode opératoire du générateur magnétocalorique. Dans l'exemple représenté, la machine électrique 9 est couplée au rotor magnétique externe 4 par une transmission mécanique. Toujours dans l'exemple représenté, cette transmission mécanique comporte de préférence une courroie crantée 10 qui engrène une couronne crantée 11 prévue à la périphérie du rotor magnétique externe 4. Bien entendu, tout autre type de transmission mécanique peut convenir, mais la transmission par courroie crantée 10 a l'avantage d'être précise, fiable et silencieuse. En outre, le rapport de réduction entre la poulie crantée 12 en sortie de la machine électrique 9 et la couronne crantée 11 du rotor magnétique externe 4 est important et permet de supprimer le réducteur entre la machine électrique 9 et le rotor magnétique externe 4, améliorant encore l'efficacité énergétique du générateur 1. La machine électrique 9 peut ainsi être dimensionnée au mieux pour atteindre le point de fonctionnement optimal du générateur 1.

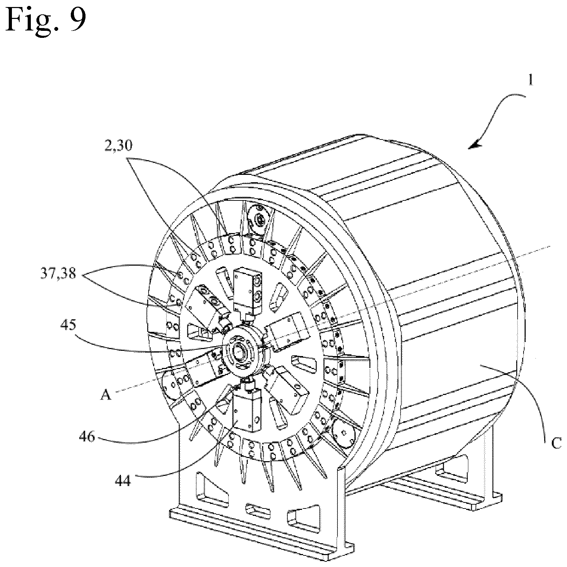

Les deux rotors 4, 5 sont guidés en rotation autour de leur axe A par des moyens de guidage portés par un carter C (figure 9). Ils sont en outre arrêtés en translation selon X par tout moyen de blocage adapté (non représenté). Le rotor magnétique interne 5 peut être guidé en rotation par tout moyen connu, et par exemple au moyen de deux paliers-13 prévus dans ses zones d'extrémité (figure 1). Le rotor magnétique externe 4 est quant à lui préférentiellement guidé en rotation par une série d'organes de guidage 14, de petite taille comparativement au diamètre moyen dudit rotor, disposés en périphérie, fixés dans les extrémités dudit rotor. Dans l'exemple représenté, les organes de guidage 14 se présentent sous la forme de galets rotatifs agencés pour circuler sur un chemin de guidage appartenant au carter C (figure 9). Cette solution est particulièrement avantageuse car elle permet un guidage rotatif du rotor magnétique externe 4 par roulement et donc sans frottement, efficace, fiable, qui ne génère pas d'échauffement donc qui ne consomme pas d'énergie. En outre, cette solution est économique compte tenu du prix de revient faible de ce type d'organes de guidage 14, qui sont des pièces disponibles dans le commerce. Elle est également universelle car elle convient à toutes les tailles du générateur 1, donc à tous les diamètres de rotor magnétique externe 4. Cependant cet exemple n'est pas limitatif et tout autre type d'organes de guidage équivalent ou adapté tel que des patins à faible coefficient de frottement peut convenir. En outre, la disposition périphérique des organes de guidage 14 permet de libérer toute la partie centrale du générateur 1, et notamment dans ses extrémités chaude EC et froide EF pour y loger le circuit caloporteur (figure 9). Cet agencement permet une meilleure compacité du générateur 1.

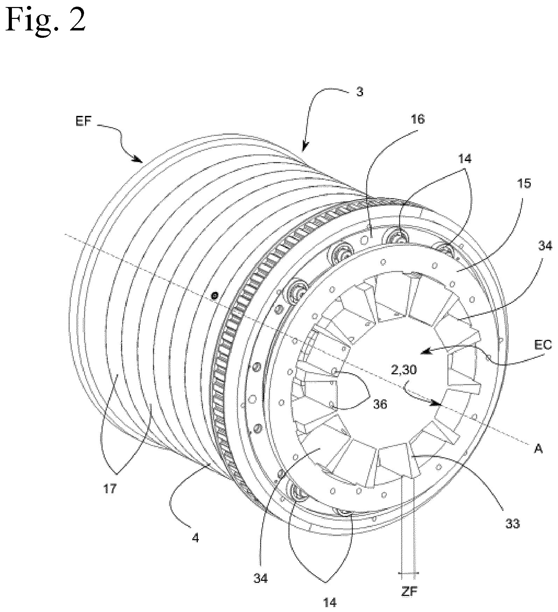

Les organes de guidage 14 peuvent être disposés régulièrement à la périphérie du rotor magnétique externe 4 (figure 1), ou de préférence en dehors des pôles magnétiques PM (figures 2 et 3), ce qui facilite leur montage et garantit un fonctionnement sans frottement et limite les courants de foucault en leur sein. Les organes de guidage 14 peuvent être montés sur des flasques 16 rapportés dans les extrémités du rotor magnétique externe 4. Le chemin de guidage peut être prévu directement sur le carter C ou dans une bague de guidage 15 rapportée sur le carter C. La bague de guidage 15 peut ainsi être réalisée dans une matière différente de celle du carter C, et notamment une matière dont la dureté est supérieure à celle de la matière du carter C, comme une bague de guidage en inox pour un carter C en aluminium sans que cet exemple ne soit limitatif, permettant d'optimiser le choix et les coûts de matière première en fonction de leur fonction. La disposition des organes de guidage 14 permet l'équilibrage des efforts radiaux tandis que le chemin de guidage ou la bague de guidage 15 peut être configuré pour former les moyens d'arrêt en translation selon X du rotor magnétique externe 4, avec ou sans frottement.

L'arrangement magnétique 3 peut être de construction monobloc ou préférentiellement de construction modulaire, conformément à la variante de réalisation illustrée. La construction modulaire permet de faciliter et de rationaliser la fabrication du générateur 1 pour répondre aux cahiers des charges et aux applications visées permettant de rallonger le générateur 1 sans en augmenter son diamètre. L'arrangement magnétique 3 comporte en référence aux figures 1, 2, 4 et 5 un assemblage d'au moins deux modules élémentaires 17 superposés axialement, le nombre de modules élémentaires 17 de l'arrangement magnétique 3 détermine la longueur de l'arrangement magnétique 3, elle-même déterminée en fonction notamment de la puissance et/ou de l'écart de température ciblé pour le générateur 1.

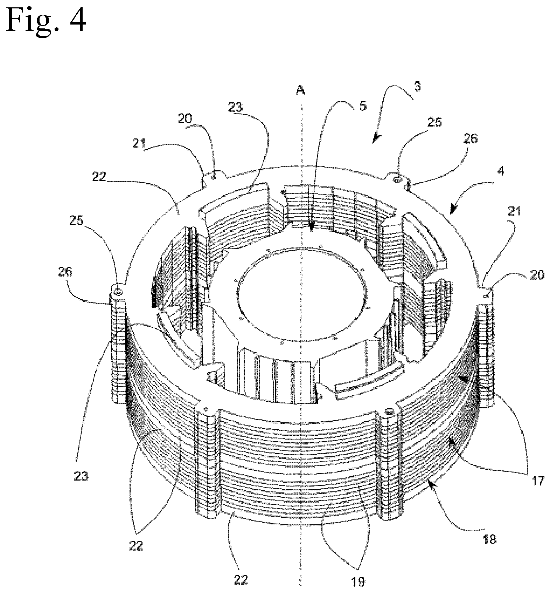

Chaque module élémentaire 17 comporte une tranche du rotor magnétique externe 4 et une tranche du rotor magnétique interne 5. Bien entendu, les modules élémentaires 17 de chaque rotor sont gérés séparément, étant donné que les deux rotors sont des pièces physiquement indépendantes. Plus particulièrement, la figure 4 illustre un assemblage de deux modules élémentaires 17 superposés des deux rotors 4, 5 représentés sans les aimants 6, 7.

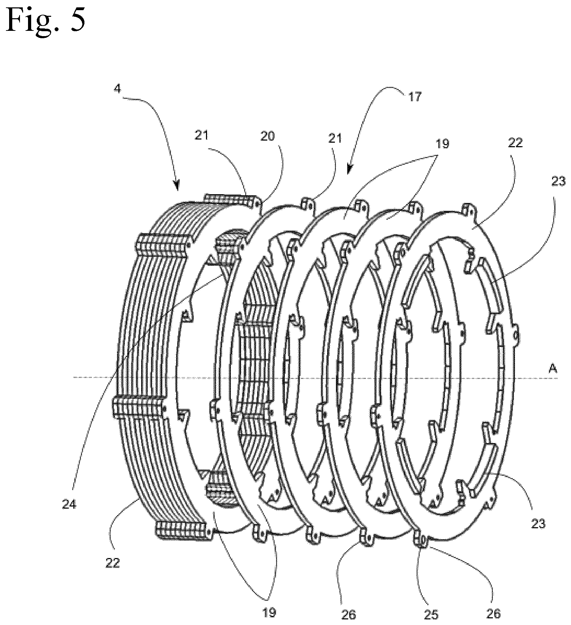

La figure 5 illustre un module élémentaire 17 ne montrant que le rotor magnétique externe 4 représenté sans les aimants 6. Chaque module élémentaire 17 comporte la carcasse magnétique 18 du rotor magnétique externe 4, qui peut être réalisée en une seule pièce ou en plusieurs pièces, comme des empilements de tôles découpées et éventuellement isolées électriquement afin d'empêcher la formation de courants de Foucault qui résulteraient d'une variation de flux magnétique provoquée par les éléments actifs 2. Dans l'exemple représenté, la carcasse magnétique 18 est constituée d'une pluralité de tôles magnétiques élémentaires 19, de quelques millimètres à quelques centimètres et par exemple entre 0.5mm et 10mm, sans que ces valeurs ne soient limitatives. Les tôles magnétiques élémentaires 19 sont découpées ou embouties, empilées axialement et assemblées entre elles par des organes de fixation (non représentés) à travers des orifices 20 prévus dans des oreilles 21 correspondantes. Bien entendu, tout autre moyen de fixation équivalent peut convenir. Le mode de fabrication par empilage de tôles magnétiques élémentaires 19, permet d'optimiser les outils de production et la quantité de matière première utilisée, pour plus de flexibilité dans la conception de l'assemblage magnétique 3 et un coût de production global moindre. La longueur axiale des modules élémentaires 17 selon l'axe X est ainsi modulable en fonction des besoins.

Les modules élémentaires 17 de chaque rotor comportent en outre des formes d'emboitement complémentaires agencées pour d'une part centrer les modules élémentaires 17 par rapport à l'axe de rotation A et indexer la position angulaire des modules élémentaires 17 l'un par rapport à l'autre. Dans l'exemple illustré dans les figures 4 et 5, chaque module élémentaire 17 du rotor magnétique externe 4 est encadré par deux tôles magnétiques d'extrémité 22, qui peuvent avoir une épaisseur supérieure à celle des tôles magnétiques élémentaires 19, et qui comportent les formes d'emboitement complémentaires. Ces formes d'emboitement complémentaires comportent dans une des tôles magnétiques d'extrémité 22 de chaque module élémentaire 17, une forme d'emboitement mâle, sous la forme d'une nervure 23 saillante axialement tournée vers l'extérieur dudit module, scindée en quatre secteurs angulaires régulièrement répartis entre les pôles magnétiques PM du rotor magnétique externe 4. En correspondance, dans la tôle magnétique d'extrémité 22 opposée de chaque module élémentaire 17, les formes d'emboitement complémentaires comportent une forme d' emboitement femelle, sous la forme d'une rainure 24 saillante axialement tournée vers l'intérieur dudit module, scindée en quatre secteurs angulaires régulièrement répartis entre les pôles magnétiques PM du rotor magnétique externe 4. Bien entendu, toute autre forme d'emboitement complémentaire équivalente peut convenir, y compris tout autre moyen de centrage et d'indexage.

Les modules élémentaires 17 formant tout ou partie de l'arrangement magnétique 3 sont en outre assemblés entre eux par des organes de fixation (non représentés), tels que des tiges filetées, des boulons, des tirants, des vis, à travers des orifices 25 prévus dans des oreilles 26 correspondantes (figure 4). Bien entendu, tout autre moyen de fixation équivalent peut convenir, tel que des points ou traits de soudure entre les modules élémentaires. Pour simplifier le montage, les modules élémentaires 17 peuvent être assemblés entre eux par groupe de deux, puis les groupes de deux peuvent être assemblés entre eux à leur tour par des flasques intermédiaires, comme représenté à la figure 1. Tout autre procédé d'assemblage peut également convenir.

Les modules élémentaires du rotor magnétique interne 5 ne sont pas représentés, mais comportent également des formes d'emboitement complémentaires, de centrage et d'indexage, ainsi que des moyens de fixation. A titre d'exemple, on peut citer des pions d'indexage et des trous de passage pour des vis permettant de réaliser à la fois la fixation et le maintien en position relative des modules élémentaires entre eux. Tout autre forme d'emboitement complémentaire équivalente et tout autre moyen de fixation équivalent peuvent convenir.

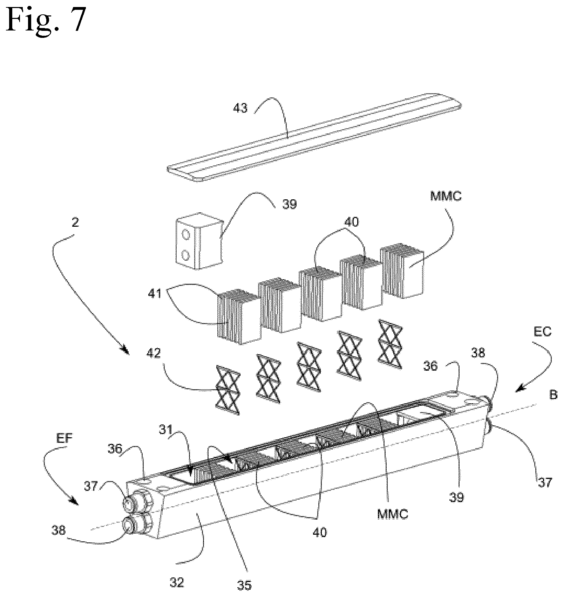

En référence plus particulièrement aux figures 2, 3 et 6, l'ensemble d'éléments actifs 2 du générateur 1 de l'invention comporte ou est formé d'un stator 30 annulaire fixe, centré sur l'axe de rotation A selon X, disposé dans l'entrefer E entre le rotor magnétique externe 4 et le rotor magnétique interne 5. Les éléments actifs 2 s'étendent longitudinalement dans le stator 30 entre une extrémité chaude EC et une extrémité froide EF du générateur 1, représentées symboliquement dans les figures 2 et 7. Les éléments actifs 2 sont poreux et traversés chacun par un caloporteur, magnétocaloriquement passif, via un circuit caloporteur, qui permet une circulation axiale selon X et alternative dudit caloporteur de ladite extrémité chaude EC à ladite extrémité froide EF et inversement de sorte à réaliser les cycles magnéto-thermodynamiques au sein du générateur 1.

La circulation axiale selon X du caloporteur est par conséquent perpendiculaire à l'orientation radiale des lignes de champ magnétique générées par les pôles magnétiques PM de l'arrangement magnétique 3. Cette disposition est particulièrement avantageuse car elle permet aux éléments actifs 2 de réaliser les cycles magnéto-thermodynamiques grâce au déplacement alternatif du caloporteur synchronisé avec les variations de champ magnétique entre les zones sous champ et les zones hors champ, sans interférence entre circuit magnétique et circuit caloporteur.

Les éléments actifs 2 sont de préférence disposés côte à côte sur la circonférence du stator 30 pour maximiser la quantité de matériau MMC présent dans le volume de l'entrefer E. Dans ce but, l'espace entre deux éléments actifs 2 consécutifs est choisi pour être le plus étroit possible afin de réduire à son minimum le volume de matériau non magnétocalorique dans le circuit magnétique disposé dans l'entrefer E, favoriser un mouvement de rotation de l'arrangement magnétique 3 le plus lisse et continu possible, nécessitant un couple de rotation le plus uniforme possible, et induisant une réduction des saccades et de la consommation énergétique.

Les éléments actifs 2 sont en outre répartis de manière régulière, séparés circonférentiellement entre eux d'un pas fixe, et le nombre d'éléments actifs 2 est de préférence un multiple du nombre des pôles magnétiques PM de l'arrangement magnétique 3. Ainsi, à chaque moment de chaque cycle de travail thermodynamique, les éléments actifs 2 sont divisés en deux groupes égaux en nombre : un groupe d'éléments actifs 2 situés dans les zones sous champ magnétique en face des pôles magnétiques PM et un groupe d'éléments actifs 2 situés dans les zones hors champ magnétique, en dehors des pôles magnétiques PM. Cet agencement particulier au sein du générateur 1 permet une bonne répartition entre les zones sous champ et les zones hors champ, et ainsi de pouvoir optimiser le cycle thermodynamique.

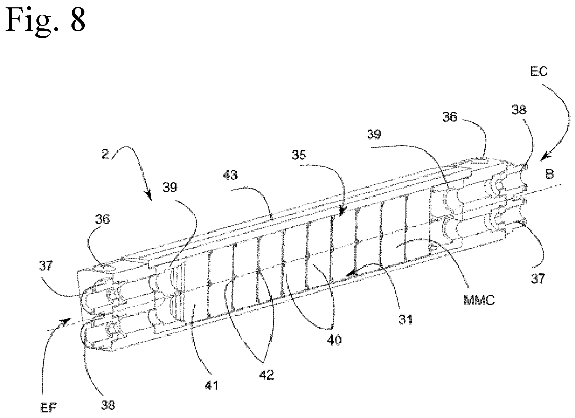

En référence plus particulièrement aux figures 7 et 8, chaque élément actif 2 se présente sous la forme d'un barreau indépendant, et comporte un porte-matériau 32 longitudinal selon X. Le porte-matériau 32 est de préférence réalisé dans un matériau thermiquement peu conducteur et électriquement isolant, tel qu'à titre d'exemple non limitatif, une matière synthétique à base de polymère, une matière composite à base de fibres de carbone, un acier inoxydable, une matière naturelle à base de silice ou résine, ou similaire. Il peut éventuellement être isolé thermiquement au moins sur ses faces supérieures et inférieures vis-à-vis des rotors magnétiques. Chaque élément actif 2 est agencé pour être logé axialement dans le stator 30 directement ou dans un support 33 compris dans ou formant ledit stator 30. Un exemple de support 33 est représenté à la figure 2 et comporte des rails de montage 34 s'étendant axialement selon X et répartis régulièrement sur la circonférence du stator 30. Les rails de montage 34 sont définis chacun par une paroi en forme de U, sans que cette forme ne soit limitative. Le support 33 est de préférence réalisé dans une matière magnétiquement neutre et électriquement non conductrice, telle qu'à titre d'exemple non limitatif, une matière synthétique à base de polymère, une matière composite à base de fibres de carbone, un acier inoxydable, une matière naturelle à base de silice ou résine, ou similaire. Dans l'exemple représenté à la figure 2, le support 33 est formé d'une seule pièce annulaire. Cet exemple n'est pas limitatif, car le support 33 peut être formé de plusieurs pièces assemblées côte à côte, chaque pièce s'étendant sur un secteur annulaire, pouvant correspondre au secteur annulaire des pôles magnétiques PM. Le support 33 n'est pas indispensable car les porte-matériaux 32 pourraient comporter, dans leurs parois latérales, des moyens d'emboitement complémentaires permettant de les assembler les uns aux autres moyennant une liaison coulissante selon X.

Dans l'exemple représenté, le support 33 du stator 30 a une longueur supérieure à celle des rotors 4, 5 pour ménager au moins une zone de fixation ZF située à l'extérieur de l'arrangement magnétique 3, au moins à l'une des extrémités dudit stator 30. Ainsi les porte-matériaux 32 peuvent être introduits et extraits facilement du stator 30, et peuvent en outre être fixés par des vis ou tout autre organe de fixation démontable, dans des trous de fixation 36 prévus à cet effet dans les porte-matériaux 32 et le support 33. Des moyens de fixation rapide par clip ou similaire peuvent également convenir.

Les porte-matériaux 32 présentent une section choisie parmi un carré, un rectangle, un trapèze, un segment de cylindre creux. Dans l'exemple représenté, la section des porte-matériaux 32 est trapézoïdale pour optimiser le volume utile du stator 30. La longueur des porte-matériaux 32 est dépendante de la longueur de l'arrangement magnétique 3, laquelle est déterminée en fonction de la puissance et/ou de l'écart de température ciblé pour le générateur 1. La conception longitudinale selon X de l'arrangement magnétique 3 et des éléments actifs 2 est avantageuse puisqu'elle permet de faciliter et de rationaliser la fabrication du générateur 1 pour répondre aux cahiers des charges et aux applications visées, dans des plages de températures variables, sans en augmenter son diamètre, en jouant sur le nombre de modules élémentaires 17 de l'arrangement magnétique 3 assemblés en série et donc sur la longueur axiale du générateur 1 selon l'axe X.

Le porte-matériau 32 de chaque élément actif 2 comporte un logement intérieur 35 agencé pour recevoir au moins un matériau MMC poreux formant un ensemble de canaux 31 permettant la circulation axiale bidirectionnelle du caloporteur à travers ledit au moins un MMC. Dans l'exemple présenté, le caloporteur est un fluide. Le porte-matériau 32 comporte alors au moins un raccord fluidique 37, 38 à chacune de ses extrémités pour raccorder l'élément actif 2 au circuit caloporteur (non représenté). Dans l'exemple représenté, le porte-matériau 32 comporte deux raccords fluidiques 37, 38 dans chacune de ses extrémités, correspondant respectivement à une entrée de fluide 37 et à une sortie de fluide 38. Les éléments actifs 2 étant fixes, les raccords fluidiques 37, 38 sont avantageusement des raccords simples, non tournants et donc étanches, car non susceptibles de générer des fuites. Le porte-matériau 32 comporte également un répartiteur 39 dans chaque zone d'extrémité entre le ou les raccords fluidiques 37, 38 et le logement intérieur 35 pour répartir le caloporteur dans l'ensemble de canaux 31.

Dans l'exemple représenté, le MMC contenu dans chaque porte-matériau 32 se présente sous la forme d'un ou de plusieurs blocs MMC poreux 40 ayant une structure amorphe ou organisée. Chaque bloc MMC poreux 40 peut être constitué de lames de matériau ou de toutes autres structures de matériau régulières ou non. Dans chaque bloc MMC poreux 40, conformément à l'exemple représenté, les structures de matériau 41 sont avantageusement en forme de lames, préférentiellement orientées axialement selon X parallèlement à l'axe longitudinal B du porte-matériau 32. Les lames s'étendent également radialement et parallèlement aux lignes de champ magnétique dans l'entrefer E. L'orientation axiale suivant X des structures de matériau 41 permet la circulation alternative du caloporteur entre les extrémités froide EF et chaude EC du générateur 1. Et l'orientation radiale des structures de matériau 41 permet de couper les courants de Foucault et de réduire le champ démagnétisant local. Les termes « axial » et « radial » utilisés sont spécifiques à la configuration cylindrique du générateur 1 telle qu'illustrée, mais s'étendent respectivement aux termes « longitudinal » et « transversal » pour un générateur 1 de configuration linéaire non représentée.

En outre, les structures de matériau 41 en forme de lames sont espacées entre elles d'un intervalle (non visible), les intervalles formant l'ensemble de canaux 31 permettant la circulation axiale bidirectionnelle selon X du caloporteur. Les intervalles entre les structures de matériau 41 forment des passages fluidiques plats et étroits, de section régulière, permettant de favoriser un écoulement fluide du caloporteur suivant X au travers du générateur 1.

Les blocs MMC poreux 40 peuvent être réalisés à partir d'un même MMC, ou à partir de différents MMC ou encore à partir de différentes compositions de MMC. Les blocs MMC poreux 40 constitués de différents MMC peuvent être ou non séparés entre eux par des cales de jonction 42. En outre, les différents MMC ou compositions de MMC seront préférentiellement rangés ou ordonnés selon une température de Curie (Tc) croissante d'une source froide située à l'extrémité froide EF à une source chaude située à l'extrémité chaude EC, évoluant par palier ou de façon continue, pour permettre l'adéquation des Tc au gradient (écart) de température, formé dans les volumes de MMC du générateur 1.

Dans une variante non représentée, le MMC contenu dans chaque porte-matériau 32 peut également se présenter sous la forme d'un ou de plusieurs blocs MMC poreux, obtenus par frittage, par exemple, les pores constituant les passages fluidiques pour le caloporteur.

Les porte-matériaux 32 comportent en outre un couvercle 43 pour fermer le logement intérieur 35 de manière étanche. Les porte-matériaux 32 et les rails de montage 34 prévus dans le support 33 peuvent comporter dans leurs parois correspondantes des moyens de guidage (non représentés) en translation axiale, tels que des rainures, des nervures, ou similaires. Les porte-matériaux 32 entre eux pourraient également comporter dans leurs parois correspondantes des moyens d'assemblage et/ou de guidage (non représentés) en translation axiale, s'ils sont montés sans le support 33.

La configuration longitudinale des éléments actifs 2 selon X est particulièrement avantageuse car elle permet de disposer les raccords fluidiques 37, 38 ou toute autre connexion thermique ou mécanique avec les sources froides et chaudes dans une des extrémités axiales ou dans les deux extrémités axiales du stator 30 selon les besoins. Les raccords fluidiques 37, 38 se situent alors à proximité des distributeurs 44 (figure 9) prévus dans une des extrémités axiales ou dans les deux extrémités axiales du générateur 1, permettant de réduire à son minimum la longueur de la tuyauterie du circuit caloporteur et l'encombrement radial du générateur 1.

Dans le cas d'un fluide caloporteur, pris en exemple et de façon non limitative, les distributeurs 44 sont commandés selon une fréquence de commutation déterminée en fonction de la fréquence des cycles de travail thermodynamique, de façon synchrone avec les zones sous champ et les zones hors champ, par un actionneur choisi parmi les actionneurs mécaniques, hydrauliques, électriques et/ou électroniques. Les distributeurs 44 peuvent être directement commandés par la rotation de l'arrangement magnétique 3 au moyen par exemple d'une came 45 solidaire du rotor magnétique interne 5 ou externe 4, qui permet d'actionner les distributeurs 44 par des tiroirs 46, comme représenté à la figure 9. Tout autre moyen de commande des distributeurs 44 équivalent peut convenir.

La conception longitudinale selon X des éléments actifs 2 offre par conséquent plusieurs avantages : faciliter la fabrication des éléments actifs 2 sous la forme de barreaux indépendants, simplifier le montage et le démontage des éléments actifs 2 dans le stator 30, standardiser les composants tels que les blocs MMC poreux 40, et réduire les coûts de revient, simplifier le circuit caloporteur et réduire les pertes de charge en raccourcissant la tuyauterie.

D'une manière générale, la conception longitudinale selon X de l'arrangement magnétique 3 et des éléments actifs 2 permet en outre d'augmenter aisément la puissance et/ou l'écart de température de travail du générateur 1 en augmentant la longueur de l'arrangement magnétique 3 et la longueur des éléments actifs 2, donc la longueur totale du générateur 1, sans augmenter sa dimension radiale, ce qui est avantageux en termes de compacité et d'encombrement du générateur 1.

Le générateur 1 selon l'invention est représenté dans une configuration cylindrique pourvu d'un arrangement magnétique 3 rotatif, comportant deux rotors magnétiques superposés qui se déplacent dans un même sens de rotation, comme il est défini par la revendication 1 annexée. Comme alternative qui ne forme pas partie de l'invention, une configuration linéaire est tout à fait envisageable, dans laquelle le stator 30 et les rotors 4, 5 sont mis à plat et les rotors 4, 5 sont déplacés linéairement, en translation alternative par rapport au stator 30. Bien entendu, la configuration cylindrique permet de déplacer les rotors 4, 5 selon un mouvement de rotation continu, beaucoup plus efficace sur le plan énergétique, plus simple et moins coûteux à réaliser.

La présente invention n'est bien entendu pas limitée aux exemples de réalisation décrits mais s'étend à toute modification et variante évidentes pour un homme du métier dans la limite des revendications annexées.

## Revendications

1. Générateur magnétocalorique (1), comportant un ensemble d'éléments actifs (2) à base de Matériaux Magnéto Caloriques (MMC), et un arrangement magnétique (3) agencé pour être mobile par rapport audit ensemble d'éléments actifs (2), ledit arrangement magnétique (3) comportant deux rotors magnétiques superposés, dont un rotor magnétique externe (4) et un rotor magnétique interne (5) délimitant entre eux un entrefer (E), ledit rotor magnétique externe (4) et ledit rotor magnétique interne (5) comportant un même nombre de pôles magnétiques (PM), ledit ensemble d'éléments actifs (2) constituant un stator (30) disposé dans ledit entrefer (E), et lesdits éléments actifs (2) s'étendant longitudinalement dans ledit stator (30) entre une extrémité chaude (EC) et une extrémité froide (EF) dudit générateur, **caractérisé en ce qu'**un desdits rotors magnétiques externe (4) ou interne (5) est couplé d'une part à une machine électrique (9) par un couplage mécanique, et d'autre part à l'autre desdits rotors magnétiques interne (5) ou externe (4) par un couplage magnétique, de sorte que lesdits rotors se déplacent dans un même sens et sont magnétiquement synchrones.

2. Générateur magnétocalorique (1) selon la revendication 1, **caractérisé en ce que** ledit générateur présente une configuration cylindrique, **en ce que** les rotors magnétiques externe (4) et interne (5) sont concentriques autour de leur axe de rotation (A), et **en ce que** ledit stator (30) présente une forme annulaire, concentrique avec lesdits rotors magnétiques externe (4) et interne (5).

3. Générateur magnétocalorique (1) selon la revendication 2, **caractérisé en ce que** ledit rotor magnétique externe (4) est couplé à ladite machine électrique (9), **en ce qu'**il comporte une couronne crantée (11) périphérique, et **en ce que** ledit couplage mécanique entre ledit rotor magnétique externe (4) et ladite machine électrique (9) comporte une transmission par courroie crantée (10) engrenant ladite couronne crantée (11).

4. Générateur magnétocalorique (1) selon l'une quelconque des revendications 2 ou 3, **caractérisé en ce que** ledit générateur comporte au moins des moyens de guidage en rotation dudit rotor magnétique externe (4) et dudit rotor magnétique interne (5) portés par un carter (C), et **en ce que** lesdits moyens de guidage en rotation dudit rotor magnétique externe (4) comportent des organes de guidage (14) périphériques, montés dans les extrémités dudit rotor magnétique externe (4), et agencés pour circuler sur un chemin de guidage appartenant audit carter (C).

5. Générateur magnétocalorique (1) selon la revendication 4, **caractérisé en ce que** lesdits organes de guidage (14) sont montés sur ledit rotor magnétique externe (4) dans des secteurs périphériques situés en dehors desdits pôles magnétiques (PM).

6. Générateur magnétocalorique (1) selon la revendication 4, **caractérisé en ce que** ledit chemin de guidage est prévu sur une bague de guidage (15) rapportée sur ledit carter (C), ladite bague de guidage (15) étant réalisée dans une matière de dureté supérieure à celle de la matière dudit carter (C).

7. Générateur magnétocalorique (1) selon l'une quelconque des revendications 1 à 6, **caractérisé en ce que** ledit arrangement magnétique (3) est de construction modulaire et comporte un assemblage d'au moins deux modules élémentaires (17) superposés, **en ce que** chaque module élémentaire (17) comporte une tranche dudit rotor magnétique externe (4) et une tranche dudit rotor magnétique interne (5), et **en ce que** le nombre de modules élémentaires (17) définit la longueur dudit arrangement magnétique (3) et est déterminé en fonction de la puissance et/ou de l'écart de température ciblé pour ledit générateur (1).

8. Générateur magnétocalorique (1) selon la revendication 7, **caractérisé en ce que** lesdits modules élémentaires (17) comportent des formes d'emboitement complémentaires agencées pour d'une part centrer lesdits modules élémentaires (17) par rapport audit axe de rotation (A) et indexer la position angulaire desdits modules élémentaires (17) l'un par rapport à l'autre.

9. Générateur magnétocalorique (1) selon la revendication 1, **caractérisé en ce que** ledit arrangement magnétique (3) comporte en regard dudit entrefer (E) un dispositif d'uniformisation de champ magnétique (8) superposé auxdits pôles magnétiques (PM) dudit rotor magnétique externe (4) et/ou dudit rotor magnétique interne (5).

10. Générateur magnétocalorique (1) selon l'une quelconque des revendications 1 à 9, **caractérisé en ce que** lesdits éléments actifs (2) sont poreux et traversés chacun par un circuit caloporteur permettant une circulation alternative d'un caloporteur de ladite extrémité chaude (EC) à ladite extrémité froide (EF) dans un premier cycle de travail et inversement de ladite extrémité froide (EF) à ladite extrémité chaude (EC) dans un second cycle de travail dudit générateur, et **en ce que** l'orientation de la circulation du caloporteur est perpendiculaire à l'orientation des lignes de champ magnétique générées par lesdits pôles magnétiques (PM) dudit arrangement magnétique (3).

11. Générateur magnétocalorique (1) selon la revendication 10, **caractérisé en ce que** le nombre d'éléments actifs (2) dudit ensemble est un multiple du nombre de pôles magnétiques (PM) dudit arrangement magnétique (3), et **en ce que** lesdits éléments actifs (2) sont disposés côte à côte sur la circonférence dudit stator (30).

12. Générateur magnétocalorique (1) selon l'une quelconque des revendications 10 et 11, **caractérisé en ce que** chaque élément actif (2) comporte un porte-matériau (32) longitudinal, logé dans ledit stator (30), **en ce que** les porte-matériaux (32) présentent une section choisie parmi un carré, un rectangle, un trapèze, une tranche de cylindre creux, et **en ce que** la longueur desdits porte-matériaux (32) est déterminée en fonction de la longueur dudit arrangement magnétique (3) et de la puissance, de l'efficacité et/ou de l'écart de température ciblé pour ledit générateur.

13. Générateur magnétocalorique (1) selon la revendication 12, **caractérisé en ce que** le porte-matériau (32) de chaque élément actif (2) comporte un logement intérieur (35) agencé pour recevoir au moins un MMC, et au moins un raccord fluidique (37, 38) à chacune de ses extrémités, agencé pour raccorder ledit élément actif (2) audit circuit caloporteur.

14. Générateur magnétocalorique (1) selon la revendication 13, **caractérisé en ce que** ledit porte-matériau (32) comporte en outre au moins un répartiteur (39) dans chaque zone d'extrémité entre ledit raccord fluidique (37, 38) et ledit logement intérieur (35).

15. Générateur magnétocalorique (1) selon l'une quelconque des revendications 10 à 14, **caractérisé en ce que** lesdits éléments actifs (2) comportent au moins un bloc MMC poreux (40) sous la forme de lames ou de structures de matériau régulières (41) orientées parallèlement à l'axe longitudinal (B) dudit porte-matériau (32), et espacées entre elles d'un intervalle, les intervalles formant un ensemble de canaux (31) longitudinaux permettant une circulation bidirectionnelle dudit caloporteur à travers chaque élément actif (2).

16. Générateur magnétocalorique (1) selon la revendication 15, **caractérisé en ce que** lesdits éléments actifs (2) comportent plusieurs blocs MMC poreux (40) constitués chacun d'un même MMC ou de différents MMC ou encore de différentes compositions MMC, les différents MMC ou compositions MMC étant rangés selon une température de Curie (Tc) croissante ou décroissante évoluant par palier ou de façon continue.

## Patentansprüche

1. Magnetokalorischer Generator (1) mit einer Baugruppe aktiver Elemente (2) auf der Basis von magnetokalorischen Materialien (MMC) und einer magnetischen Anordnung (3), die so angeordnet ist, dass sie in Bezug auf die Baugruppe aktiver Elemente (2) beweglich ist, wobei die magnetische Anordnung (3) zwei übereinander angeordnete Magnetrotoren umfasst, darunter einen äußeren Magnetrotor (4) und einen inneren Magnetrotor (5), zwischen denen ein Luftspalt (E) gebildet wird, wobei der äußere Magnetrotor (4) und der innere Magnetrotor (5) die gleiche Anzahl von Magnetpolen (PM) aufweisen, die Baugruppe der aktiven Elemente (2) einen Stator (30) bildet, der in dem Luftspalt (E) angeordnet ist, und sich die aktiven Elemente (2) in Längsrichtung in dem Stator (30) zwischen einem heißen Ende (EC) und einem kalten Ende (EF) des Generators erstrecken, **dadurch gekennzeichnet, dass** der äußere (4) oder der innere (5) Magnetrotor einerseits über eine mechanische Kupplung mit einer elektrischen Maschine (9) verbunden ist und andererseits über eine magnetische Kupplung mit dem anderen inneren (5) oder äußeren (4) Magnetrotor verbunden ist, so dass sich die Rotoren in derselben Richtung bewegen und magnetisch synchron sind.

2. Magnetokalorischer Generator (1) nach Anspruch 1, **dadurch gekennzeichnet, dass** der Generator eine zylindrische Konfiguration aufweist, dass der äußere (4) und der innere (5) Magnetrotor um ihre Drehachse (A) konzentrisch verlaufen und dass der Stator (30) eine Ringform aufweist, die konzentrisch zu dem äußeren (4) und dem inneren (5) Magnetrotor ist.

3. Magnetokalorischer Generator (1) nach Anspruch 2, **dadurch gekennzeichnet, dass** der äußere Magnetrotor (4) mit der elektrischen Maschine (9) gekoppelt ist, dass er einen peripherischen Zahnkranz (11) aufweist und dass die mechanische Kupplung zwischen dem äußeren Magnetrotor (4) und der elektrischen Maschine (9) einen Zahnriemenantrieb (10) umfasst, der in den Zahnkranz (11) eingreift.

4. Magnetokalorischer Generator (1) nach einem der Ansprüche 2 oder 3, **dadurch gekennzeichnet, dass** der Generator mindestens Führungsmittel für die Drehung des äußeren Magnetrotors (4) und des inneren Magnetrotors (5) umfasst, die von einem Gehäuse (C) getragen werden, und dass die Führungsmittel für die Drehung des äußeren Magnetrotors (4) peripherische Führungsorgane (14) umfassen, die an den Enden des äußeren Magnetrotors (4) angebracht und so angeordnet sind, dass sie auf einer zum Gehäuse (C) gehörenden Führungsbahn laufen.

5. Magnetokalorischer Generator (1) nach Anspruch 4, **dadurch gekennzeichnet, dass** die Führungsorgane (14) an dem äußeren Magnetrotor (4) in peripherischen Abschnitten außerhalb der Magnetpole (PM) angebracht sind.

6. Magnetokalorischer Generator (1) nach Anspruch 4, **dadurch gekennzeichnet, dass** die Führungsbahn auf einem Führungsring (15) vorgesehen ist, der an dem Gehäuse (C) angebracht ist, wobei der Führungsring (15) aus einem Material hergestellt ist, das härter ist als das Material des Gehäuses (C).

7. Magnetokalorischer Generator (1) nach einem der Ansprüche 1 bis 6, **dadurch gekennzeichnet, dass** die magnetische Anordnung (3) modular aufgebaut ist und eine Anordnung aus mindestens zwei übereinander angeordneten Elementarmodulen (17) umfasst, dass jedes Elementarmodul (17) einen Abschnitt des äußeren Magnetrotors (4) und einen Abschnitt des inneren Magnetrotors (5) umfasst, und dass die Anzahl der Elementarmodule (17) die Länge der magnetischen Anordnung (3) bestimmt, die in Abhängigkeit von der Leistung und/oder der Solltemperaturdifferenz für den Generator (1) bestimmt wird.

8. Magnetokalorischer Generator (1) nach Anspruch 7, **dadurch gekennzeichnet, dass** die Elementarmodule (17) komplementäre Eingriffsformen aufweisen, die so angeordnet sind, dass sie einerseits die Elementarmodule (17) in Bezug auf die Drehachse (A) zentrieren und andererseits die Winkelposition der Elementarmodule (17) zueinander koppeln.

9. Magnetokalorischer Generator (1) nach Anspruch 1, **dadurch gekennzeichnet, dass** die magnetische Anordnung (3) gegenüber dem Luftspalt (E) eine Vorrichtung (8) zur Vereinheitlichung des Magnetfelds aufweist, die den Magnetpolen (PM) des äußeren Magnetrotors (4) und/oder des inneren Magnetrotors (5) überlagert ist.

10. Magnetokalorischer Generator (1) nach einem der Ansprüche 1 bis 9, **dadurch gekennzeichnet, dass** die aktiven Elemente (2) durchlässig sind und jeweils von einem Wärmeträgerkreis durchdrungen werden, der eine alternative Zirkulation eines Wärmeträgers vom heißen Ende (EC) zum kalten Ende (EF) in einem ersten Arbeitszyklus und umgekehrt vom kalten Ende (EF) zum heißen Ende (EC) in einem zweiten Arbeitszyklus des Generators ermöglicht, und dass die Ausrichtung der Zirkulation des Wärmeträgers senkrecht zur Ausrichtung der Magnetfeldlinien ist, die von den Magnetpolen (PM) der magnetischen Anordnung (3) erzeugt werden.

11. Magnetokalorischer Generator (1) nach Anspruch 10, **dadurch gekennzeichnet, dass** die Anzahl der aktiven Elemente (2) der Baugruppe ein Vielfaches der Anzahl der Magnetpole (PM) der magnetischen Anordnung (3) ist und dass die aktiven Elemente (2) nebeneinander auf dem Umfang des Stators (30) angeordnet sind.

12. Magnetokalorischer Generator (1) nach einem der Ansprüche 10 und 11, **dadurch gekennzeichnet, dass** jedes aktive Element (2) einen longitudinalen Materialträger (32) umfasst, der in dem Stator (30) untergebracht ist, dass die Materialträger (32) einen Querschnitt aufweisen, der aus einem Quadrat, einem Rechteck, einem Trapez, einem Hohlzylinderabschnitt ausgewählt ist, und dass die Länge der Materialträger (32) in Abhängigkeit von der Länge der magnetischen Anordnung (3) und der Leistung, dem Wirkungsgrad und/oder der Differenz der Solltemperatur für den Generator bestimmt wird.

13. Magnetokalorischer Generator (1) nach Anspruch 12, **dadurch gekennzeichnet, dass** der Materialträger (32) jedes aktiven Elements (2) eine Innenaufnahme (35) aufweist, die so angelegt ist, dass sie mindestens ein magnetokalorisches Material aufnehmen kann, und mindestens einen Fluidanschluss (37, 38) an jedem seiner Enden, der so angeordnet ist, dass er das aktive Element (2) mit dem Wärmeträgerkreis verbindet.

14. Magnetokalorischer Generator (1) nach Anspruch 13, **dadurch gekennzeichnet, dass** der Materialträger (32) außerdem mindestens einen Verteiler (39) in jedem Endbereich zwischen dem Fluidanschluss (37, 38) und der Innenaufnahme (35) umfasst.

15. Magnetokalorischer Generator (1) nach einem der Ansprüche 10 bis 14, **dadurch gekennzeichnet, dass** die aktiven Elemente (2) mindestens einen durchlässigen magnetokalorischen Materialblock (40) in Form von Lamellen oder regelmäßigen Materialstrukturen (41) umfassen, die parallel zur Längsachse (B) des Materialträgers (32) ausgerichtet und im Abstand voneinander angeordnet sind, wobei die Abstände eine Baugruppe von longitudinalen Kanälen (31) bilden, die es möglich machen, dass der Wärmeträger in beiden Richtungen durch jedes aktive Element (2) zirkuliert.

16. Magnetokalorischer Generator (1) nach Anspruch 15, **dadurch gekennzeichnet, dass** die aktiven Elemente (2) aus mehreren durchlässigen magnetokalorischen Materialblöcken (40) bestehen, die jeweils aus demselben magnetokalorischen Material oder aus verschiedenen magnetokalorischen Materialien oder auch aus verschiedenen magnetokalorischen Materialzusammenstellungen bestehen, wobei die verschiedenen magnetokalorischen Materialien oder magnetokalorischen Materialzusammenstellungen nach einer zunehmenden oder abnehmenden Curie-Temperatur (Tc) geordnet sind, die einen stufenweisen oder kontinuierlichen Verlauf aufweist.

## Claims

1. Magnetocaloric generator (1), comprising a set of active elements (2) based of Magnetocaloric Materials (MCM), and a magnetic arrangement (3) arranged to be movable with respect to said set of active elements (2), said magnetic arrangement (3) comprising two superposed magnetic rotors, namely an external magnetic rotor (4) and an internal magnetic rotor (5) delimiting an air gap (E) between them, said external magnetic rotor (4) and said internal magnetic rotor (5) comprising one same number of magnetic poles (PM), said set of active elements (2) constituting a stator (30) disposed in said air gap (E), and said active elements (2) extending longitudinally in said stator (30) between a hot end (EC) and a cold end (EF) of said generator, **characterised in that** one of said external (4) or internal (5) magnetic rotors is coupled, on the one hand, to an electrical machine (9) by a mechanical coupling, and on the other hand, to the other of said internal (5) or external (4) magnetic rotors by a magnetic coupling, such that said rotors move in one same direction and are magnetically synchronous.

2. Magnetocaloric generator (1) according to claim 1, **characterised in that** said generator has a cylindrical configuration, **in that** the external (4) and internal (5) magnetic rotors are concentric about their axis of rotation (A), and **in that** said stator (30) has an annular shape, concentric with said external (4) and internal (5) magnetic rotors.

3. Magnetocaloric generator (1) according to claim 2, **characterised in that** said external magnetic rotor (4) is coupled to said electrical machine (9), **in that** it comprises a peripheral toothed ring (11), and **in that** said mechanical coupling between said external magnetic rotor (4) and said electrical machine (9) comprises a transmission by toothed belt (10) meshing said toothed ring (11).

4. Magnetocaloric generator (1) according to any one of claims 2 or 3, **characterised in that** said generator comprises at least means for rotatably guiding said external magnetic rotor (4) and said internal magnetic rotor (5) carried by a casing (C), and **in that** said means for rotatably guiding said external magnetic rotor (4) comprise peripheral guiding members (14), mounted in the ends of said external magnetic rotor (4), and arranged to circulate over a guiding path belonging to said casing (C).

5. Magnetocaloric generator (1) according to claim 4, **characterised in that** said guiding members (14) are mounted on said external magnetic rotor (4) in peripheral sectors located outside of said magnetic poles (PM).

6. Magnetocaloric generator (1) according to claim 4, **characterised in that** said guiding path is provided on a guiding ring (15) added to said casing (C), said guiding ring (15) being of a material of hardness greater than that of the material of said casing (C).

7. Magnetocaloric generator (1) according to any one of claims 1 to 6, **characterised in that** said magnetic arrangement (3) is of modular construction and comprises an assembly of at least two superposed basic modules (17), **in that** each basic module (17) comprises a portion of said external magnetic rotor (4) and a portion of said internal magnetic rotor (5), and **in that** the number of basic modules (17) defines the length of said magnetic arrangement (3) and is determined according to the power and/or to the temperature difference targeted for said generator (1).

8. Magnetocaloric generator (1) according to claim 7, **characterised in that** said basic modules (17) comprise complementary interlocking shapes arranged, on the one hand, to centre said basic modules (17) with respect to said axis of rotation (A) and index the angular position of said basic modules (17) against one another.

9. Magnetocaloric generator (1) according to claim 1, **characterised in that** said magnetic arrangement (3) comprises, facing said air gap (E), a magnetic field uniforming device (8) superposed to said magnetic poles (PM) of said external magnetic rotor (4) and/or said internal magnetic rotor (5).

10. Magnetocaloric generator (1) according to any one of claims 1 to 9, **characterised in that** said active elements (2) are porous and each passed through by a heat-transfer circuit enabling an alternative circulation of a heat-transfer fluid from said hot end (EC) to said cold end (EF) in a first work cycle, and conversely, from said cold end (EF) to said hot end (EC) in a second work cycle of said generator, and **in that** the orientation of the circulation of the heat-transfer fluid is perpendicular to the orientation of the magnetic field lines generated by said magnetic poles (PM) of said magnetic arrangement (3).

11. Magnetocaloric generator (1) according to claim 10, **characterised in that** the number of active elements (2) of said assembly is a multiple of the number of magnetic poles (PM) of said magnetic arrangement (3), and **in that** said active elements (2) are disposed side-by-side over the circumference of said stator (30).

12. Magnetocaloric generator (1) according to any one of claims 10 and 11, **characterised in that** each active element (2) comprises a longitudinal material carrier (32), housed in said stator (30), **in that** the material carriers (32) have a cross-section chosen from among a square, a rectangle, a trapezium, a hollow cylinder portion, and **in that** the length of said material carriers (32) is determined according to the length of said magnetic arrangement (3) and to the power, to the effectiveness and/or to the temperature difference targeted for said generator.

13. Magnetocaloric generator (1) according to claim 12, **characterised in that** the material carrier (32) of each active element (2) comprises an inner housing (35) arranged to receive at least one MCM, and at least one fluid connector (37, 38) at each of its ends, arranged to connect said active element (2) to said heat-transfer circuit.

14. Magnetocaloric generator (1) according to claim 13, **characterised in that** said material carrier (32) further comprises at least one distributor (39) in each end zone between said fluid connector (37, 38) and said inner housing (35).

15. Magnetocaloric generator (1) according to any one of claims 10 to 14, **characterised in that** said active elements (2) comprise at least one porous MCM block (40) in the form of regular material strips or structures (41), oriented parallel to the longitudinal axis (B) of said material carrier (32), and spaced apart from one another by an interval, the intervals forming a set of longitudinal channels (31) enabling a two-directional circulation of said heat-transfer fluid through each active element (2).

16. Magnetocaloric generator (1) according to claim 15, **characterised in that** said active elements (2) comprise several porous MCM blocks (40), each consisting of one same MCM or of different MCMs or also of different MCM compositions, the different MCMs or MCM compositions being stored according to an increasing or decreasing Curie temperature (Tc) evolving stepwise or continuously.
